# EUROPEAN PATENT APPLICATION

(11) **EP 3 082 069 A1**
(43) Date of publication of application: **19.10.2016**
(21) Application number: 16165617.8
(22) Date of filing: 15.04.2016
(51) Int. Cl.: G06K 9/00

(54) **STEREOSCOPIC OBJECT DETECTION DEVICE AND STEREOSCOPIC OBJECT DETECTION METHOD**

(30) Priority: 17.04.2015 JP 2015084914
(71) Applicant: Toyota Jidosha Kabushiki Kaisha, Toyota-shi, Aichi 471-8571 (JP)
(72) Inventor: NISHIJIMA, Masakazu, Aichi-Ken, Aichi 471-8571 (JP)
(74) Representative: D Young & Co LLP

(57) **Abstract**

A second classification unit (14) classifies each set of classified parallax points is classified into any one of a stereoscopic object category, a road surface category, and an unknown category based on the distribution of the longitudinal positions of the parallax points belonging to the set in the parallax image. A road surface estimation unit (15) estimates a road surface based on the parallax points of the set classified into the road surface category, and a third classification unit (16) classifies a set corresponding to a stereoscopic object among the sets classified into the unknown category based on the estimated road surface.

## Description

### TECHNICAL FIELD

An aspect and another aspect of the present invention relate to a stereoscopic object detection device and a stereoscopic object detection method.

### BACKGROUND

A technique which detects a stereoscopic object in the surroundings of a vehicle based on image data representing a plurality of images having parallax acquired by imaging the surroundings of the vehicle with an in-vehicle camera from different points of view has been suggested.

For example, in a device of US Unexamined Patent Application Publication No. 2014/0071240, image data representing a plurality of images having parallax acquired by an in-vehicle stereo camera is acquired. A parallax image representing parallax at each parallax point as a point corresponding to each of a plurality of images is generated based on image data. A road surface in the surroundings of the vehicle is estimated based on information relating to the parallax points of the generated parallax image. A stereoscopic object, such as a bus or a motorcycle, protruding from the road surface is detected based on the parallax points and the estimated road surface.

On the other hand, in the device of US Unexamined Patent Application Publication No. 2014/0071240, although a stereoscopic object can be detected with high accuracy, there is a problem in that a calculation load is large, and improvement is necessary.

Accordingly, an object of the invention is to provide a stereoscopic object detection device and a stereoscopic object detection method capable of reducing a calculation load while maintaining the accuracy of detecting a stereoscopic object.

### SUMMARY

According to an aspect of the invention, a stereoscopic object detection device includes an imaging unit configured to acquire image data representing a plurality of images having parallax by imaging the surroundings of a vehicle with an in-vehicle camera from different points of view, a parallax image generation unit configured to generate a parallax image, representing the parallax at each parallax point as a point, corresponding to each of the plurality of images based on the image data, a first classification unit configured to classify the parallax points into a plurality of sets based on a parallax range, where a plurality of ranges are divided according to parallax of the parallax points in the parallax image, and a transverse position range, where a plurality of ranges are divided according to the transverse positions of the parallax points in the parallax image, a second classification unit configured, for each of the sets into which the parallax points are classified, to classify the set into one of a plurality of categories including a stereoscopic object category, a road surface category, and an unknown category based on the distribution of the longitudinal positions of the parallax points belonging to the set in the parallax image, a road surface estimation unit configured to estimate a road surface in the surroundings of the vehicle based on the parallax points of the sets classified into the road surface category, and a third classification unit configured to classify the set corresponding to a stereoscopic object from among the sets classified into the unknown category based on the estimated road surface.

With this configuration, the parallax points are classified into each of a plurality of sets by the first classification unit based on the parallax range of the parallax points in the parallax image and the transverse position range, and for each of the sets into which the parallax points are classified, the set is classified into any of a plurality of categories including the stereoscopic object category, the road surface category, and the unknown category based on the distribution of the longitudinal positions of the parallax points belonging to the set in the parallax image by the second classification unit. With this, it is possible to generally classify a set of parallax points of a stereoscopic object, a set of parallax points of a road surface, and a set of parallax points in which it is unknown whether the parallax points are parallax points of a stereoscopic object or parallax points of a road surface with a small calculation load. The road surface is estimated based on the parallax points of the sets classified into the road surface category by the road surface estimation unit, and the set corresponding to the stereoscopic object is classified from among the sets classified into the unknown category based on the estimated road surface by the third classification unit. With this, since the processing for detecting the stereoscopic object based on the parallax points and the estimated road surface is limited to the sets of parallax points classified into the unknown category, it is possible to reduce a calculation load while maintaining the accuracy of detecting a stereoscopic object.

In this case, for each of the sets into which the parallax points are classified, the second classification unit may classify the set, in which the number of parallax points belonging to the set is less than an invalidation threshold value, into an invalidation category not belonging to any of the stereoscopic object category, the road surface category, and the unknown category.

With this configuration, since a set which can be regarded just as noise or the like due to a small number of parallax points belonging to the set is classified into the invalidation category not belonging to any of the stereoscopic object category, the road surface category, and the unknown category by the second classification unit, and is excluded from calculation for detecting a stereoscopic object, it is possible to further reduce a calculation load.

For each of the sets into which the parallax points are classified, the second classification unit may classify the set into the stereoscopic object category when the range, where the parallax points belonging to the set are distributed at the longitudinal positions in the parallax image, is equal to or greater than a stereoscopic object threshold value, may classify the set into the road surface category when the range, where the parallax points belonging to the set are distributed at the longitudinal positions in the parallax image, is equal to or less than a road surface threshold value, the road surface threshold value being less than the stereoscopic object threshold value, and may classify the set into the unknown category when the range, where the parallax points belonging to the set are distributed at the longitudinal positions in the parallax image, is less than the stereoscopic object threshold value and exceeds the road surface threshold value.

With this configuration, when the range, where the parallax points belonging to the set are distributed at the longitudinal positions in the parallax image, is equal to or greater than the stereoscopic object threshold value, there is a high possibility that the set of parallax points is a stereoscopic object and hence the set is classified into the stereoscopic object category by the second classification unit. When the range, where the parallax points belonging to the set are distributed at the longitudinal positions in the parallax image, is equal to or less than the road surface threshold value, the road surface threshold value being less than the stereoscopic object threshold value, there is a high possibility that the set of parallax points is a road surface and hence the set is classified into the road surface category by the second classification unit. A set which has not been classified into the stereoscopic object category or the road surface category is classified into the unknown category by the second classification unit. With this, it is possible to generally classify a set of parallax points of a stereoscopic object, a set of parallax points of a road surface, and a set of parallax points in which it is unknown whether the parallax points are parallax points of a stereoscopic object or parallax points of a road surface with a small calculation load.

According to another aspect of the invention, a stereoscopic object detection method includes an imaging step of acquiring image data representing a plurality of images having parallax by imaging the surroundings of a vehicle with an in-vehicle camera from different points of view by an imaging unit of a stereoscopic object detection device, a parallax image generation step of generating a parallax image, representing the parallax at each parallax point as a point, corresponding to each of the plurality of images based on the image data by a parallax image generation unit of the stereoscopic object detection device, a first classification step of classifying the parallax points into a plurality of sets based on a parallax range, where a plurality of ranges are divided according to parallax of the parallax points in the parallax image, and a transverse position range, where a plurality of ranges are divided according to the transverse positions of the parallax points in the parallax image, by a first classification unit of the stereoscopic object detection device, a second classification step of, for each of the sets into which the parallax points are classified, classifying the set into one of a plurality of categories including a stereoscopic object category, a road surface category, and an unknown category based on the distribution of the longitudinal positions of the parallax points belonging to the set in the parallax image by a second classification unit of the stereoscopic object detection device, a road surface estimation step of estimating a road surface in the surroundings of the vehicle based on the parallax points of the sets classified into the road surface category by a road surface estimation unit of the stereoscopic object detection device, and a third classification unit which classifies the set corresponding to a stereoscopic object from among the sets classified into the unknown category based on the estimated road surface by a third classification unit of the stereoscopic object detection device.

In this case, in the second classification step, for each of the sets into which the parallax points are classified, the set, in which the number of parallax points belonging to the set is less than an invalidation threshold value, may be classified into an invalidation category not belonging to any of the stereoscopic object category, the road surface category, and the unknown category.

In the second classification step, for each of the sets into which the parallax points are classified, the set may be classified into the stereoscopic object category when the range, where the parallax points belonging to the set are distributed at the longitudinal positions in the parallax image, is equal to or greater than a stereoscopic object threshold value, the set may be classified into the road surface category when the range, where the parallax points belonging to the set are distributed at the longitudinal positions in the parallax image, is equal to or less than a road surface threshold value, the road surface threshold value being less than the stereoscopic object threshold value, and the set may be classified into the unknown category when the range, where the parallax points belonging to the set are distributed at the longitudinal positions in the parallax image, is less than the stereoscopic object threshold value and exceeds the road surface threshold value.

According to an aspect and another aspect of the invention, it is possible to reduce a calculation load while maintaining the accuracy of detecting a stereoscopic object.

### BRIEF DESCRIPTION OF THE DRAWINGS

Fig. 1 is a block diagram showing a stereoscopic object detection device of an embodiment.
Fig. 2 is a flowchart showing the operation of the stereoscopic object detection device of Fig. 1.
Fig. 3 is a diagram showing a parallax map in which the horizontal axis represents a transverse position in a parallax image and the vertical axis represents parallax.
Fig. 4A is a diagram showing parallax points belonging to a set (block) classified into a stereoscopic object category, Fig. 4B is a diagram showing parallax points belonging to a set classified into a road surface category, Fig. 4C is a diagram showing parallax points belonging to a set classified into an unknown category, and Fig. 4D is a diagram showing parallax points belonging to a set classified into an invalidation category.
Fig. 5 is a diagram showing an example where parallax points belonging to each set classified into a road surface category are plotted on a V-disparity plane.
Fig. 6 is a diagram showing a road surface and a road wall imaged in an image.
Fig. 7 is a diagram showing a method of classifying a set corresponding to the road wall of Fig. 6 from among sets classified into an unknown category based on an estimated road surface.
Fig. 8 is a diagram showing a road surface and a guardrail imaged in an image.
Fig. 9 is a diagram showing a method of classifying a set corresponding to the guardrail of Fig. 8 from among sets classified into an unknown category based on an estimated road surface.

### DETAILED DESCRIPTION

Hereinafter, a stereoscopic object detection device and a stereoscopic object detection method according to an embodiment of the invention will be described.

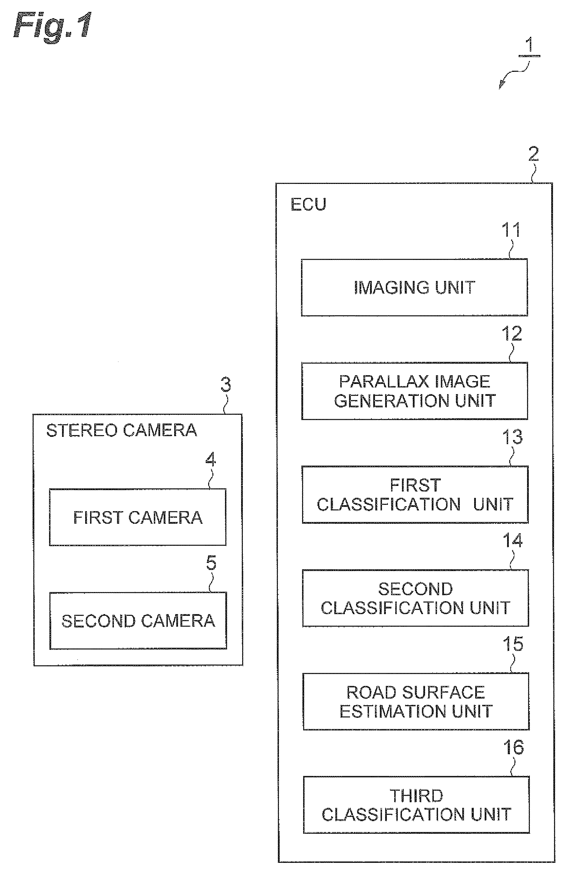

As shown in Fig. 1, a stereoscopic object detection device 1 of a first embodiment is mounted in, for example, a vehicle, such as a passenger vehicle, and detects a stereoscopic object in the surroundings of the vehicle. The stereoscopic object means, for example, an object projecting from a road surface in the surroundings of the vehicle, and includes both an object separated from the road surface and an object integrated with the road surface. The road surface is, for example, the surface of a road on which the vehicle can travel. The road surface may include the surface of a passage of a parking lot or a parking space, in addition to the surface of the road on which the vehicle travels.

The stereoscopic object detection device 1 includes an electronic control unit (ECU) 2 for detecting a stereoscopic object, and a stereo camera (in-vehicle camera) 3. The ECU 2 is an electronic control unit having a central processing unit (CPU), a read only memory (ROM), a random access memory (RAM), and the like. The ECU 2 loads a program stored in the ROM into the RAM and execute the program on the CPU, thereby executing various kinds of processing. The ECU 2 may be constituted of a plurality of electronic control units.

The stereo camera 3 is an image acquisition apparatus which acquires a plurality of images having parallax acquired by imaging the surroundings of the vehicle with an in-vehicle camera from different points of view. The stereo camera 3 has a first camera 4 and a second camera 5 arranged so as to reproduce binocular parallax. The first camera 4 and the second camera 5 are provided on, for example, the rear side of a windshield of the vehicle, and image in front of the vehicle.

The first camera 4 and the second camera 5 are attached, for example, at a predetermined interval in a horizontal direction; thus, if an object is imaged, a left image and a right image as a plurality of images having parallax are obtained. The obtained two images have parallax. For this reason, it is possible to acquire a parallax image including information relating to parallax at each of the parallax points, the parallax points based on corresponding points between the two images, from the two images. It is possible to determine the distance of a road surface and of a stereoscopic object at each parallax point based on the parallax image according to the principle of triangulation.

The first camera 4 and the second camera 5 may be provided in the side portions or in the rear portion of the vehicle (for example, the rear side of the rear glass), and may image sideways or at the rear of the vehicle. The stereo camera 3 may acquire three or more images having parallax by imaging the surroundings of the vehicle with three or more cameras from three or more different points of view. The stereo camera 3 transmits image data representing a plurality of captured images having parallax to the ECU 2.

The stereoscopic object detection device 1 may include a monocular camera, instead of the stereo camera 3. In the monocular camera, it is also possible to obtain a parallax image using a known method (for example, a method using a time difference at the time of imaging).

Next, the functional configuration of the ECU 2 will be described. As shown in Fig. 1, the ECU 2 has an imaging unit 11, a parallax image generation unit 12, a first classification unit 13, a second classification unit 14, a road surface estimation unit 15, and a third classification unit 16. The imaging unit 11 acquires image data representing two images having parallax by imaging the surroundings of the vehicle with the stereo camera 3 from different points of view of the first camera 4 and the second camera 5.

The parallax image generation unit 12 generates a parallax image representing parallax at each of the parallax points, the parallax points based on the corresponding points between the two images, based on image data acquired by the imaging unit 11. The first classification unit 13 classifies the parallax points into each of a plurality of sets based on a parallax range where a plurality of ranges are divided according to parallax of the parallax points in the parallax image generated by the parallax image generation unit 12 and a transverse position range where a plurality of ranges are divided according to the transverse positions of the parallax points in the parallax image.

For each of the sets into which the parallax points are classified by the first classification unit 13, the second classification unit 14 classifies the set into any of a stereoscopic object category, a road surface category, an unknown category, and an invalidation category based on the distribution of the longitudinal positions of the parallax points belonging to the set in the parallax image. The road surface estimation unit 15 estimates a road surface in the surroundings of the vehicle based on the parallax points of the sets classified into the road surface category by the second classification unit 14. The third classification unit 16 classifies a set corresponding to a stereoscopic object from among the sets classified into the unknown category based on the road surface estimated by the road surface estimation unit 15.

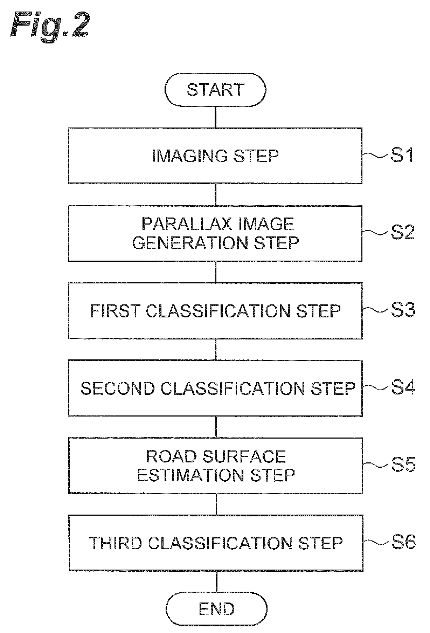

Hereinafter, the operation of the stereoscopic object detection device 1 of this embodiment will be described. As shown in Fig. 2, as an imaging step, image data representing the two images having parallax is acquired by imaging the surroundings of the vehicle with the stereo camera 3 from the different points of view of the first camera 4 and the second camera 5 by the imaging unit 11 of the ECU 2 of the stereoscopic object detection device 1 (S1).

As a parallax image generation step, the parallax image representing parallax (distance) at each of the parallax points, the parallax points based on the corresponding points between the two images, is generated based on image data acquired in the imaging step by the parallax image generation unit 12 of the ECU 2 of the stereoscopic object detection device 1 (S2). In the calculation of parallax at the parallax points of the two images, for example, the parallax points are set in the area of a predetermined size with a plurality of pixels corresponding to each of the two images, and parallax can be calculated using a sum of absolute difference (SAD). Parallax at the parallax points may be calculated using the square sum of the difference or a normalization function.

As a first classification step, for the parallax image generated in the parallax image generation step, the parallax points are classified into each of a plurality of sets based on a parallax range where a plurality of ranges are divided according to parallax at the parallax points in the parallax image and a transverse position range where a plurality of ranges are divided according to the transverse positions of the parallax points in the parallax image by the first classification unit 13 of the ECU 2 of the stereoscopic object detection device 1 (S3).

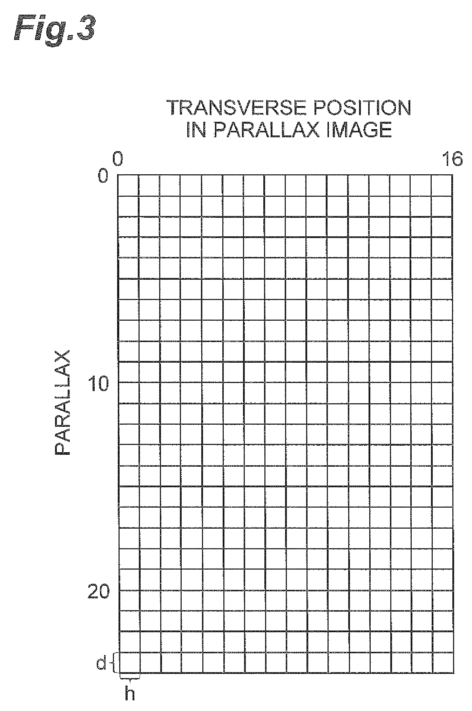

The first classification unit 13 sets a parallax vote map shown in Fig. 3. The parallax vote map of Fig. 3 is constituted by arranging a plurality of rectangular blocks determined such that a side in a longitudinal direction corresponds to the magnitude of parallax and a side in a transverse direction corresponds to the coordinates of the parallax image in a horizontal direction (transverse direction). Each of a plurality of rectangular blocks of the parallax vote map indicates a set of parallax points based on a parallax range d where a plurality of ranges are divided according to parallax of parallax points in the parallax image and a transverse position range v where a plurality of ranges are divided according to the transverse positions of the parallax points in the parallax image.

The first classification unit 13 classifies (votes) the corresponding parallax points into each of the blocks of the parallax vote map shown in Fig. 3. The first classification unit 13 stores the coordinates of each parallax point in the horizontal direction in the parallax image, parallax at each parallax point, the coordinates of each parallax point in a vertical direction (longitudinal direction) in the parallax image, and the number of parallax points in association with each block of the parallax vote map.

As shown in Fig. 2, as a second classification step, for each of the sets into which the parallax points are classified in the first classification step, the set is classified into any of the stereoscopic object category, the road surface category, the unknown category, and the invalidation category based on the distribution of the vertical (longitudinal) positions of the parallax points belonging to the set in the vertical direction in the parallax image by the second classification unit 14 of the stereoscopic object detection device 1 (S4).

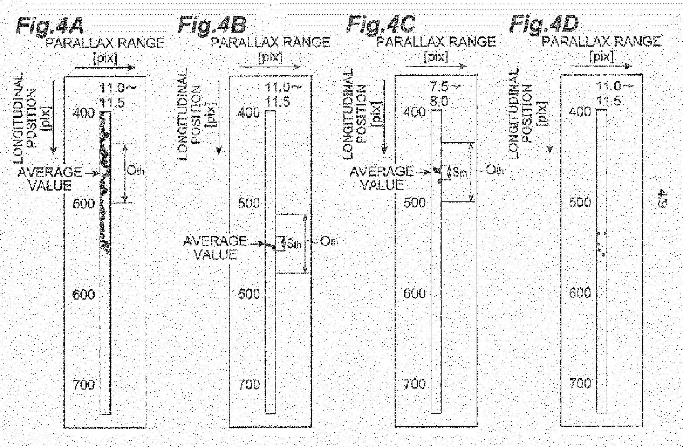

As shown in Fig. 4A, when the number of parallax points belonging to the set is equal to or greater than an invalidation threshold value set in advance and the range, where the parallax points belonging to the set are distributed at the longitudinal positions in the parallax image, is equal to or greater than a stereoscopic object threshold value Oₜₕ set in advance, the second classification unit 14 classifies the set into the stereoscopic object category. The invalidation threshold value is the threshold value of the number of parallax points for determining whether or not to use the set of parallax points for detection of a stereoscopic object and a road surface. The stereoscopic object threshold value Oₜₕ is the threshold value of the distribution range of the parallax points in the longitudinal direction in the parallax image for determining whether or not the set of parallax points indicates a stereoscopic object.

As shown in Fig. 4A, when the parallax points having the same degree of parallax (distance) are distributed in a wide range of the longitudinal positions in the parallax image, it can be estimated that the set of parallax points indicates a stereoscopic object. The second classification unit 14 may perform linear approximation on a coordinate plane with parallax and the longitudinal positions in the parallax image as coordinate axes for each of the parallax points belonging to the set and may classify the set into the stereoscopic object category when the gradient of the longitudinal positions in the parallax image to parallax of the line is steeper than a value set in advance.

As shown in Fig. 4B, when the number of parallax points belonging to the set is equal to or greater than the invalidation threshold value set in advance and the range, where the parallax points belonging to the set are distributed at the longitudinal positions in the parallax image, is equal to or less than a road surface threshold value Sₜₕ, the road surface threshold value Sₜₕ being less than the stereoscopic object threshold value Oₜₕ, the second classification unit 14 classifies the set into the road surface category. The road surface threshold value Sₜₕ is the threshold value of the distribution range of the parallax points at the longitudinal positions in the parallax image that indicates a road surface.

As shown in Fig. 4B, when the parallax points having the same degree of parallax (distance) are distributed in a narrow range of the longitudinal positions in the parallax image and the longitudinal positions in the parallax image smoothly move upward with a decrease in parallax (with an increase in the distance), it can be estimated that the set of parallax points indicates a road surface. The second classification unit 14 may perform linear approximation on a coordinate plane with parallax and the longitudinal positions in the parallax image as coordinate axes for each of the parallax points belonging to the set, and may classify the set into the road surface category when the gradient of the longitudinal positions in the parallax image to parallax of the line is gentler than a value set in advance.

As shown in Fig. 4C, when the number of parallax points belonging to the set is equal to or greater than the invalidation threshold value set in advance and the range, where the parallax points belonging to the set are distributed at the longitudinal positions in the parallax image, is less than the stereoscopic object threshold value Oₜₕ and exceeds the road surface threshold value Sₜₕ, the second classification unit 14 classifies the set into the unknown category. A comparison with a road surface is not yet performed in the stage of the second classification step; thus, for the set of parallax points which cannot be estimated to be parallax points indicating a stereoscopic object with high accuracy, the estimation regarding whether or not the parallax points indicate a stereoscopic object is retained. The second classification unit 14 may perform linear approximation on a coordinate plane with parallax and the longitudinal positions in the parallax image as coordinate axes for each of the parallax points belonging to the set and may classify the set into the unknown category when the gradient of the longitudinal positions in the parallax image to parallax of the line is within a range set in advance.

As shown in Fig. 4D, when the number of parallax points belonging to the set is less than the invalidation threshold value, the second classification unit 14 classifies the set into the invalidation category not belonging to any of the stereoscopic object category, the road surface category, and the unknown category. The second classification unit 14 may classify a set of parallax points into an arbitrary category other than the stereoscopic object category, the road surface category, the unknown category, and the invalidation category.

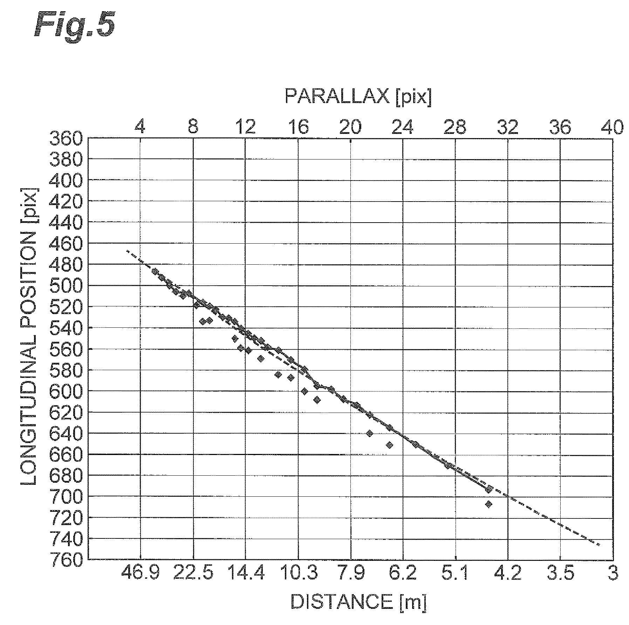

As shown in Fig. 2, as a road surface estimation step, a road surface in the surroundings of the vehicle is estimated based on the parallax points of the sets classified into the road surface category by the road surface estimation unit 15 of the ECU 2 of the stereoscopic object detection device 1 (S5). The estimation of the road surface based on the parallax points of the sets classified into the road surface category can be performed by, for example, known v-disparity. As shown in Fig. 5, v-disparity is a graph in which the horizontal axis represents parallax (the distance indicated by parallax), the vertical axis represents the coordinates in the vertical direction in the parallax image, and a histogram in the horizontal direction with respect to the parallax image is determined. In the parallax image, the area of the road surface smoothly decreases in parallax (increases in the distance indicated by parallax) when the coordinates of the parallax image in the vertical direction changes upward. For this reason, as shown in Fig. 5, in the v-disparity plane, the road surface is projected as a line segment extending in an oblique direction. The road surface estimation unit 15 extracts the parallax points which are estimated as the parallax points indicating the road surface. The road surface estimation unit 15 may estimate the road surface in the surroundings of the vehicle based on the parallax points of the sets classified into the road surface category by known methods other than v-disparity.

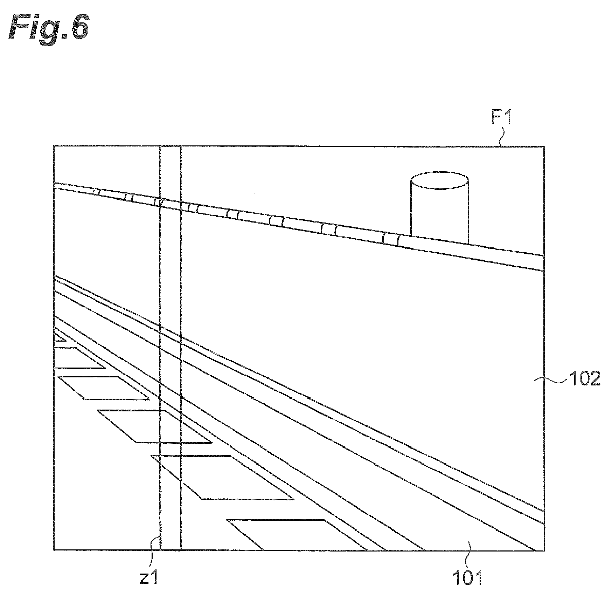

As shown in Fig. 2, as a third classification step, sets corresponding to a stereoscopic object from among the sets classified into the unknown category are classified based on the estimated road surface by the third classification unit 16 of the ECU 2 of the stereoscopic object detection device 1 (S6). For example, as shown in Fig. 6, it is assumed that, in an image F1 in which a road surface 101 and a road wall 102 are imaged, sets of parallax points are classified in a range z1 as described above. As shown in Fig. 4C, in the second classification step, the set is classified into the unknown category since the height of the road wall 102 from the road surface 101 is low and the range where the parallax points are distributed at the longitudinal positions in the parallax image is narrow.

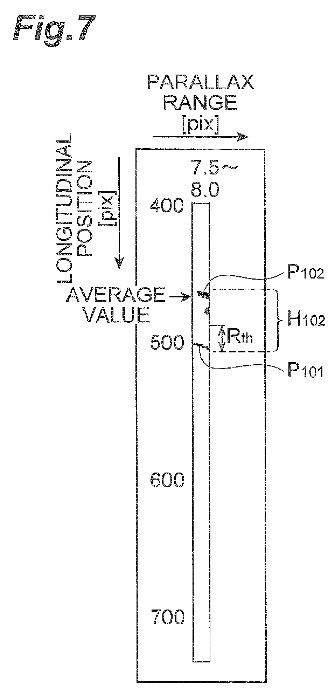

As shown in Fig. 7, in the third classification step, parallax points P₁₀₁ which are estimated as parallax points indicating a road surface in the road surface estimation step for the set are shown. When the height H₁₀₂ from the parallax point P₁₀₁ at the lowest longitudinal position in the parallax image among the parallax points P₁₀₁, indicating the road surface, to the parallax point P₁₀₂ at the highest longitudinal position in the parallax image among parallax points P₁₀₂, indicating the road wall 102, is equal to or greater than a reclassification threshold value Rₜₕ set in advance, the third classification unit 16 classifies a set previously classified into the unknown category as a set corresponding to a stereoscopic object. The reclassification threshold value Rₜₕ is the threshold value of the range of the longitudinal positions in the parallax image for classifying a set previously classified into the unknown category as a set corresponding to a stereoscopic object.

In the third classification step, when the height from the average value of the longitudinal positions in the in the parallax image among the parallax points P₁₀₁, indicating the road surface, to the average value of the longitudinal positions in the parallax image among the parallax points P₁₀₂, indicating the road wall 102, is equal to or greater than the reclassification threshold value Rₜₕ set in advance, the third classification unit 16 may classify a set previously classified into the unknown category as a set corresponding to a stereoscopic object. In the third classification step, when the height from the parallax point P₁₀₁ at the highest longitudinal position in the parallax image among the parallax points P₁₀₁, indicating the road surface, to the parallax point P₁₀₂ at the lowest longitudinal position in the parallax image among the parallax points P₁₀₂, indicating the road wall 102, is equal to or greater than the reclassification threshold value Rₜₕ set in advance, third classification unit 16 may classify a set previously classified into the unknown category as a set corresponding to a stereoscopic object.

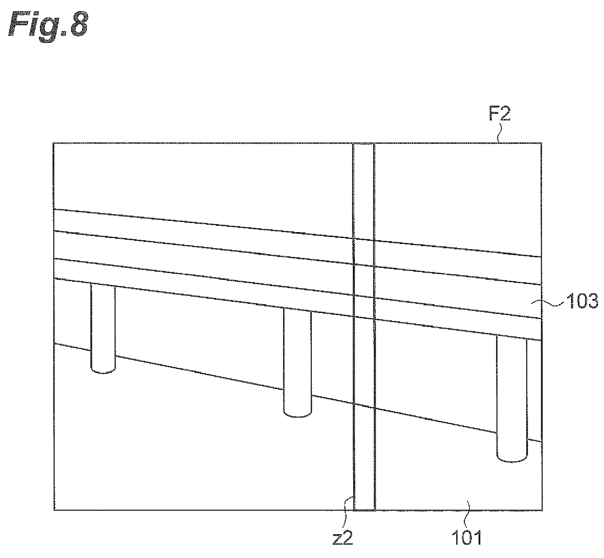

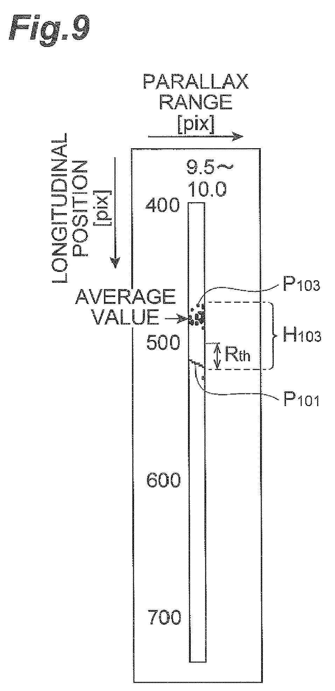

For example, as shown in Fig. 8, it is assumed that, in an image F2 in which a road surface 101 and a guardrail 103 are imaged, sets are classified in a range z2 as described above. As shown in Fig. 9, when the height H₁₀₃ from a parallax point P₁₀₁ at the lowest longitudinal position in the parallax image among the parallax points P₁₀₁, indicating the road surface, to a parallax point P₁₀₃ at the height longitudinal position in the parallax image among the parallax points P₁₀₃, indicating the guardrail 103, is equal to or greater than the reclassification threshold value Rₜₕ set in advance, the third classification unit 16 classifies a set previously classified into the unknown category as a set corresponding to a stereoscopic object.

In this embodiment, the parallax points are classified into each of a plurality of sets by the first classification unit 13 based on the parallax range d of the parallax points in the parallax image and the transverse position range h, and for each of the sets into which the parallax points are classified, the set is classified into any of a plurality of categories including the stereoscopic object category, the road surface category, and the unknown category based on the distribution of the longitudinal positions of the parallax points belonging to the set in the parallax image by the second classification unit 14. With this, it is possible to generally classify a set of parallax points of a stereoscopic object, a set of parallax points of a road surface, and a set of parallax points in which it is unknown whether the parallax points are parallax points of a stereoscopic object or parallax points of a road surface with a small calculation load. The road surface is estimated based on the parallax points of the sets classified into the road surface category by the road surface estimation unit 15, and the set corresponding to the stereoscopic object is classified from among the sets classified into the unknown category based on the estimated road surface by the third classification unit 16. With this, since the processing for detecting the stereoscopic object based on the parallax points and the estimated road surface is limited to the sets of parallax points classified into the unknown category, it is possible to reduce a calculation load while maintaining the accuracy of detecting a stereoscopic object.

In this embodiment, since a set which can be regarded just as noise or the like due to a small number of parallax points belonging to the set is classified into the invalidation category not belonging to any of the stereoscopic object category, the road surface category, and the unknown category by the second classification unit 14, and is excluded from calculation for detecting a stereoscopic object, it is possible to further reduce a calculation load.

In this embodiment, when the range, where the parallax points belonging to the set are distributed at the longitudinal positions in the parallax image, is equal to or greater than the stereoscopic object threshold value Oₜₕ, there is a high possibility that the set of parallax points is a stereoscopic object and hence the set is classified into the stereoscopic object category by the second classification unit 14. When the range, where the parallax points belonging to the set are distributed at the longitudinal positions in the parallax image, is equal to or less than the road surface threshold value Sₜₕ, the road surface value Sₜₕ being less than the stereoscopic object threshold value Oₜₕ, there is a high possibility that the set of parallax points is a road surface and hence the set is classified into the road surface category by the second classification unit 14. A set which has not been classified into the stereoscopic object category or the road surface category is classified into the unknown category by the second classification unit 14. With this, it is possible to generally classify a set of parallax points of a stereoscopic object, a set of parallax points of a road surface, and a set of parallax points in which it is unknown whether the parallax points are parallax points of a stereoscopic object or parallax points of a road surface with a small calculation load.

The stereoscopic object detection device and the stereoscopic object detection method according to the embodiment of the invention is not limited to the above-described embodiment, and various alterations can of course be made without departing from the gist of the embodiment of the invention.

For example, in the foregoing embodiment, a set of parallax points may not necessarily be classified into the invalidation category, and a set of parallax points may be classified into any of the stereoscopic object category, the road surface category, and the unknown category by the second classification unit 14. With this, even when the number of parallax points belonging to a set, the estimation regarding whether or not the set of parallax points is a stereoscopic object or a road surface is performed; thus, it is possible to improve the accuracy of detecting a stereoscopic object. The stereoscopic object detection device 1 may include a display unit which displays the detected stereoscopic object to the driver of the vehicle. The stereoscopic object detection device 1 may include a traveling control unit which executes vehicle control, such as braking, acceleration, steering of the vehicle, based on the detected stereoscopic object.

## Claims

1. A stereoscopic object detection device comprising:
an imaging unit configured to acquire image data representing a plurality of images having parallax by imaging the surroundings of a vehicle with an in-vehicle camera from different points of view;
a parallax image generation unit configured to generate a parallax image, representing the parallax at each parallax point as a point, corresponding to each of the plurality of images based on the image data;
a first classification unit configured to classify the parallax points into a plurality of sets based on a parallax range, where a plurality of ranges are divided according to parallax of the parallax points in the parallax image, and a transverse position range, where a plurality of ranges are divided according to the transverse positions of the parallax points in the parallax image;
a second classification unit configured, for each of the sets into which the parallax points are classified, to classify the set into one of a plurality of categories including a stereoscopic object category, a road surface category, and an unknown category based on the distribution of the longitudinal positions of the parallax points belonging to the set in the parallax image;
a road surface estimation unit configured to estimate a road surface in the surroundings of the vehicle based on the parallax points of the sets classified into the road surface category; and
a third classification unit configured to classify the set corresponding to a stereoscopic object from among the sets classified into the unknown category based on the estimated road surface.

2. The stereoscopic object detection device according to claim 1,
wherein, for each of the sets into which the parallax points are classified, the second classification unit is configured to classify the set, in which the number of parallax points belonging to the set is less than an invalidation threshold value, into an invalidation category not belonging to any of the stereoscopic object category, the road surface category, and the unknown category.

3. The stereoscopic object detection device according to claim 1 or 2,
wherein, for each of the sets into which the parallax points are classified, the second classification unit is configured to
classify the set into the stereoscopic object category when the range, where the parallax points belonging to the set are distributed at the longitudinal positions in the parallax image, is equal to or greater than a stereoscopic object threshold value,
classify the set into the road surface category when the range, where the parallax points belonging to the set are distributed at the longitudinal positions in the parallax image, is equal to or less than a road surface threshold value less than the stereoscopic object threshold value, and
classify the set into the unknown category when the range, where the parallax points belonging to the set are distributed at the longitudinal positions in the parallax image, is less than the stereoscopic object threshold value and exceeds the road surface threshold value.

4. A stereoscopic object detection method comprising:
an imaging step of acquiring image data representing a plurality of images having parallax by imaging the surroundings of a vehicle with an in-vehicle camera from different points of view by an imaging unit of a stereoscopic object detection device;
a parallax image generation step of generating a parallax image, representing the parallax at each parallax point as a point, corresponding to each of the plurality of images based on the image data by a parallax image generation unit of the stereoscopic object detection device;
a first classification step of classifying the parallax points into a plurality of sets based on a parallax range, where a plurality of ranges are divided according to parallax of the parallax points in the parallax image, and a transverse position range, where a plurality of ranges are divided according to the transverse positions of the parallax points in the parallax image, by a first classification unit of the stereoscopic object detection device;
a second classification step of, for each of the sets into which the parallax points are classified, classifying the set into one of a plurality of categories including a stereoscopic object category, a road surface category, and an unknown category based on the distribution of the longitudinal positions of the parallax points belonging to the set in the parallax image by a second classification unit of the stereoscopic object detection device;
a road surface estimation step of estimating a road surface in the surroundings of the vehicle based on the parallax points of the sets classified into the road surface category by a road surface estimation unit of the stereoscopic object detection device; and
a third classification unit which classifies the set corresponding to a stereoscopic object from among the sets classified into the unknown category based on the estimated road surface by a third classification unit of the stereoscopic object detection device.

5. The stereoscopic object detection method according to claim 4,
wherein, in the second classification step, for each of the sets into which the parallax points are classified, the set, in which the number of parallax points belonging to the set is less than an invalidation threshold value, is classified into an invalidation category not belonging to any of the stereoscopic object category, the road surface category, and the unknown category.

6. The stereoscopic object detection method according to claim 4 or 5,
wherein, in the second classification step, for each of the sets into which the parallax points are classified,
the set is classified into the stereoscopic object category when the range, where the parallax points belonging to the set are distributed at the longitudinal positions in the parallax image, is equal to or greater than a stereoscopic object threshold value,
the set is classified into the road surface category when the range, where the parallax points belonging to the set are distributed at the longitudinal positions in the parallax image, is equal to or less than a road surface threshold value less than the stereoscopic object threshold value, and
the set is classified into the unknown category when the range, where the parallax points belonging to the set are distributed at the longitudinal positions in the parallax image, is less than the stereoscopic object threshold value and exceeds the road surface threshold value.
